# FASCICULE DE BREVET EUROPEEN

(11) **EP 0 605 315 B1**
(45) Date de publication et mention de la délivrance du brevet: **18.03.1998**
(21) Numéro de dépôt: 93403181.6
(22) Date de dépôt: 27.12.1993
(51) Int. Cl.: B66F 19/00, B66F 3/00

(54) **Dispositif d'actionnement à vérin de traction et rappel élastique**
Betätigungsvorrichtung bestehend aus einem Zugverstellglied und einer elastischen Rückstellanordnung
Actuating device consisting of a pull-type actuator and an elastic return

(30) Priorité: 30.12.1992 FR 9215927
(43) Date de publication de la demande: 06.07.1994
(73) Titulaire: De Gelis, Christian, F-41500 Muides s/Loire (FR)
(72) Inventeur: De Gelis, Christian, F-41500 Muides s/Loire (FR)
(74) Mandataire: Gorrée, Jean-Michel

(56) Documents cités:
- EP-A- 0 017 914
- WO-A-92/10422
- DE-C- 51 537
- DE-C- 920 390
- FR-A- 709 875
- GB-A- 441 280
- US-A- 3 765 648
- US-A- 4 074 892
- US-A- 5 143 507

## Description

L'invention est relative à un dispositif d'entraînement destiné au déplacement dans l'espace d'un objet mobile par rapport à un point fixe. Les mécanismes d'entraînement de ce type peuvent servir, en particulier, à lever des éléments de tête et de pieds de fauteuils et de lits, orienter des antennes paraboliques, commander à distance des leviers inaccessibles de toute sorte.

L'invention est relative plus particulièrement à un dispositif d'entraînement tel que mentionné dans le préambule de la revendication 1. Le document WO-A-92/10 422 décrit un dispositif d'entraînement de ce type.

L'invention a pour but de conformer un dispositif d'entraînement pour les usages cités, de telle sorte que, sous un encombrement très réduit, le dispositif d'entraînement ait une capacité de déplacement très importante et que les différents éléments constitutifs du dispositif soient de configuration et de montage très simple et d'un prix de revient très bas.

A ces fins, un dispositif d'entraînement du type précité se caractérise essentiellement, étant agencé conformément à l'invention, en ce que :
- le moteur est supporté par le guide tubulaire et son arbre s'étend transversalement dans ce dernier pour tirer l'organe allongé uniquement dans un premier sens de déplacement par rapport audit guide tubulaire ;
- à l'élément enroulable sont associés des moyens de démultiplication qui comprennent un mécanisme de mouflage étagé avec des galets disposés à l'intérieur d'au moins le guide tubulaire ou l'élément allongé, l'un de ces galets étant un galet menant monté sur l'arbre de sortie du moteur et sur lequel s'enroule la seconde extrémité de l'élément enroulable ; et
- un ressort de rappel est associé à l'élément allongé pour rappeler celui-ci en extension. L'élément enroulable peut de préférence être choisi parmi un feuillard métallique, une chaîne, un filin souple, tel qu'une corde de piano.

Il est ainsi possible de constituer le dispositif sous un très faible encombrement, notamment en hauteur, permettant par exemple de l'incorporer sans difficulté dans une armature de lit, sans que des pièces ou parties de pièces fassent saillie et soient susceptibles de blesser un utilisateur.

Pour stabiliser l'élément mobile déplacé par le dispositif et faire en sorte qu'il demeure parallèle à une direction de référence (cas notamment d'une extrémité relevable de lit), il est intéressant de faire en outre en sorte que l'élément mobile soit lié à une tube coaxial supportant des paires de bras opposés engrenant mutuellement par leurs extrémités adjacentes respectivement et solidarisés de façon articulée à leur autre extrémité aux deux pièces mutuellement déplaçables sous l'action du dispositif d'entraînement, ce grâce à quoi lesdits bras forment au moins un losange déformable conférant un déplacement mutuellement parallèle des deux pièces.

L'invention sera mieux comprise à la lecture de la description détaillée qui suit de certains modes de réalisation préférés, donnés uniquement à titre d'exemples non limitatifs. Dans cette description, on se réfère aux dessins annexés sur lesquels :
- la figure 1 est une coupe longitudinale d'un mode de réalisation préféré d'un dispositif d'entraînement agencé conformément à l'invention ;
- la figure 2 est une vue de côté de l'ensemble du dispositif d'entraînement selon la figure 1 ; et
- la figure 3 est une vue de côté d'un mécanisme de stabilisation de l'élément mobile, susceptible d'être adjoint au dispositif des figures 1 et 2.

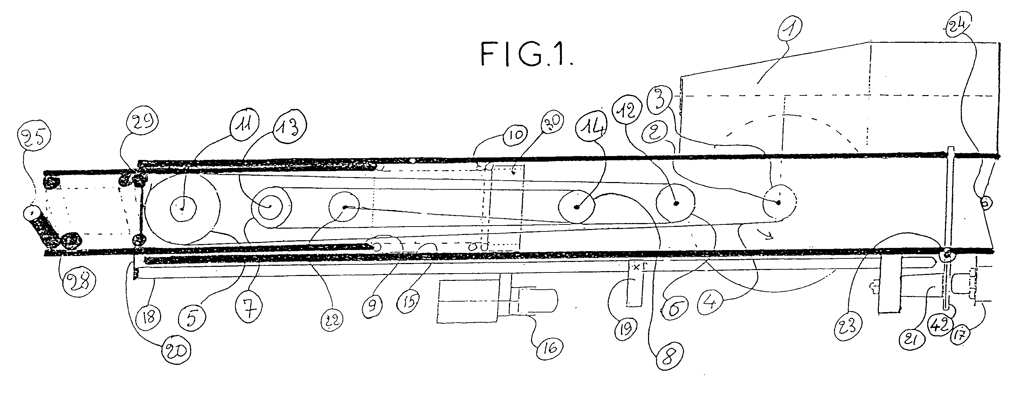

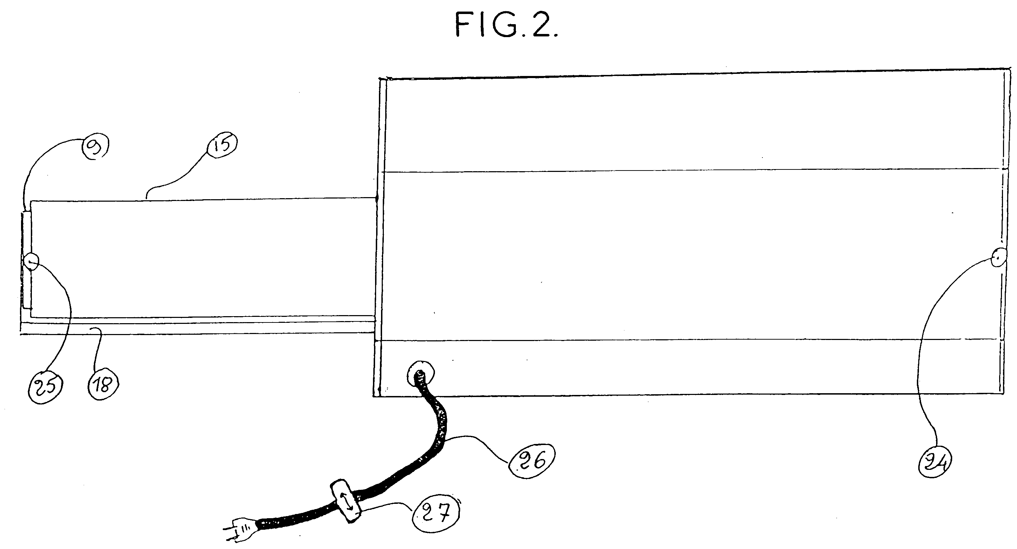

En se référant tout d'abord aux figures 1 et 2, un dispositif d'entraînement constitué selon l'invention, pour le déplacement dans l'espace d'une pièce mobile par rapport à un point fixe, comprend un moteur 1 entraînant, autour de son arbre 2, un élément enroulable 4 tirant sur un élément de levage mobile 9 lié à un point fixe 22 servant d'ancrage à l'élément souple 4 et coulissant, perpendiculairement à l'axe du mécanisme de mouflage ainsi constitué, dans un guide tubulaire 15 à l'intérieur duquel il est logé et comprimant un ressort de rappel 10 assurant le retour en extension de l'élément mobile 9 jouant ainsi son rôle de vérin.

L'élément enroulable souple 4 peut être un feuillard métallique ; ou bien encore une chaîne formée d'éléments articulés à pas constants, permettant sa traction par un pignon remplaçant le treuil 3, solidaire de l'arbre 2, ceci afin d'obtenir une force de traction constante ; ou bien encore un filin souple, par exemple une corde à piano.

De préférence, on associe au moteur 1 des moyens de démultiplication qui, avantageusement, comprennent au moins un galet 5 organisé en mouflage. La démultiplication du mécanisme peut bien entendu être accrue en augmentant le nombre des galets, comme représenté par les galets 5, 6, 7 et 8 sur la figure 1, et en accroissant le nombre de tours d'enroulement ou de brins de l'élément souple 4, de façon à constituer un mouflage étagé.

Les galets de diamètres différents 5, 6, 7 et 8 sont portés par les axes 11 et 13 à l'intérieur de l'élément de levage mobile 9 et par les axes 12 et 14 à l'intérieur du guide 15, ce qui permet d'éliminer les risques de frottement des brins ou couches successives de l'élément souple 4 sur lui-même. Un tel agencement peut être réalisé dans son ensemble sous une forme très aplatie comme montré à la figure 1.

Ainsi, l'élément souple 4 accroché au point d'ancrage 22 solidaire de la base de l'élément mobile 9 s'enroule sur le premier galet 8 de faible diamètre solidaire du guide 15, situé à proximité de la butée 30 du ressort de rappel 10 et dans tous les cas entre cette butée et le treuil 3 ; l'élément souple 4 s'étend ensuite vers le deuxième galet 7 d'un diamètre supérieur situé entre le point d'ancrage 22 et le plus grand galet 5 solidaires de l'élément mobile 9, s'enroule alors sur ledit galet 7 pour passer ensuite autour d'un galet 6 de diamètre supérieur, situé sur le guide 15 entre le treuil 3 et le galet 8 ; il atteint ensuite le plus grand galet 5 pour s'enrouler sur ce dernier, puis est fixé sur le treuil 3. Les cinq brins de ce mouflage ne sont pas limitatifs et le nombre des brins doit être adapté en fonction de la puissance du moteur et de l'effort à développer. Les axes 11, 12, 13 et 14 doivent être maintenus parallèles et il convient de prévoir des moyens empêchant la rotation de l'élément mobile 9 dans son guide 15, par exemple en réalisant les deux organes 9 et 15 sous forme de tubes coulissants polygonaux ou de tubes ronds cannelés ou clavetés, ou encore de tubes à sections ovales.

Selon un premier mode de réalisation avantageux en raison de sa simplicité de mise en oeuvre (par exemple pour commander le pivotement de parties mobiles de lits), le moteur 1 est du type électrique, par exemple extra-plat à aimant permanent, et on prévoit un système d'arrêt automatique du moteur comportant des interrupteurs de fin de course d'extension 16 et de rétraction 17 actionnables par une tringlerie 18 et un taquet réglable 19 monté sur celle-ci, cette tringlerie 18 étant entraînée parallèlement à l'élément de levage 9 et reliée à celui-ci par une transmission élastique 20. L'interrupteur de fin de course 17 de position rétractée de l'élément mobile 9 a pour autre caractéristique d'être piloté par un déclencheur magnétique 21 tout ou rien qui, étant sollicité par la tringlerie 18, pousse sur une plaque de fer doux 42 montée pivotante sur un axe 23, la décolle brutalement de l'aimant permanent 21 après avoir suffisamment emmagasiné d'énergie au niveau de la transmission élastique 20 et actionne brusquement l'interrupteur 17 qui prend une position brutalement ouverte; ce mécanisme n'est pas nécessaire en fin de course d'extension, le dispositif d'entraînement développant à ce moment-là un effort se rapprochant de zéro.

Selon un autre mode de réalisation, le dispositif de fin de course électrique décrit peut aussi contrôler et piloter l'alimentation en fluide de l'électrovanne d'un moteur pneumatique freiné ou hydraulique freiné avec frein électrique, utilisé en variante d'un moteur électrique.

La figure 2 montre le dispositif d'entraînement sous forme d'un élément capoté prêt à être monté. Les fixations sur un objet fixe et un objet amovible s'effectuent au moyen respectivement d'un axe mobile 24 et d'un axe amovible 25, ce dernier étant associé à un amortisseur intégré de surcharge, par exemple un ressort 28 lié à l'extrémité intérieure 29 de l'élément mobile 9 au-delà du galet de grand diamètre 5. Un câble électrique de liaison 26 permet de faire fonctionner le dispositif par télécommande grâce à l'insertion d'un interrupteur inverseur 27, sélectionnant le sens de la marche, l'énergie électrique étant prise sur le secteur électrique ou aux bornes d'un accumulateur ou analogue.

L'intérêt du dispositif conforme à l'invention est qu'il travaille en traction et donc sans contrainte de flambage.

Un exemple typique de réalisation d'un dispositif d'entraînement du type décrit ci-dessus peut être le suivant: en tant que moteur d'entraînement, on utilise un moto-réducteur 1 à aimant permanent extra-plat du type lève-vitre automobile développant, sur son arbre de sortie, un couple de 1 m.daN enroulant le feuillard 4 sur un treuil 3 d'un centimètre de diamètre, ce qui donne une force de traction de 100 daN multiplée par 5 en raison de mouflage à cinq brins, soit 500 m. daN environ.

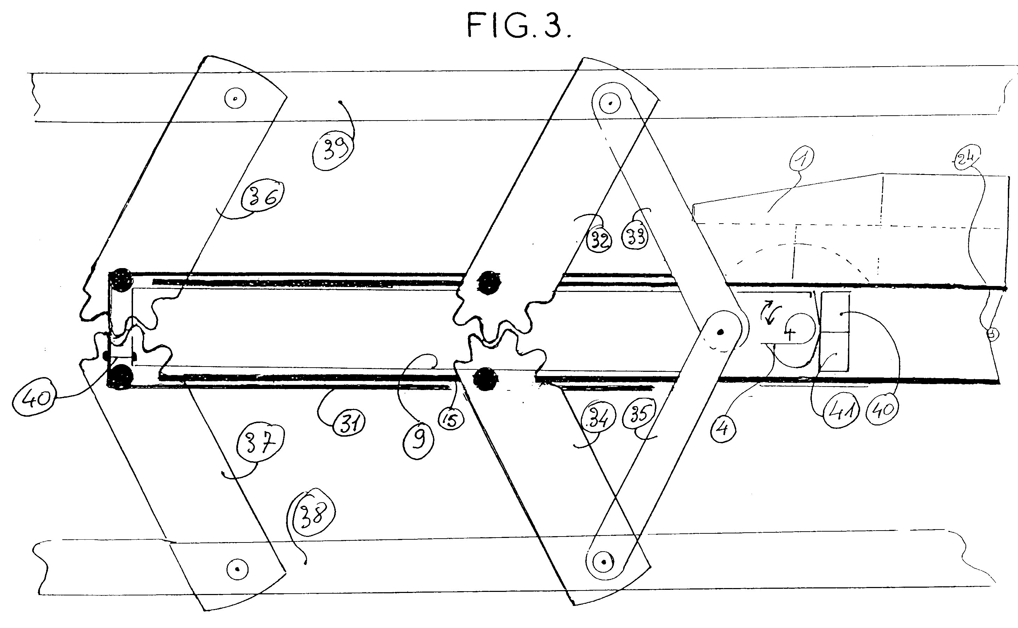

La figure 3 montre schématiquement un mode de réalisation particulier du dispositif de l'invention agencé en vue du déplacement mutuellement parallèle de deux pièces notamment de type allongé (par exemple des barres).

Dans cet agencement l'élément mobile 9 est lié en 40 à un tube extérieur coaxial 31 supportant des paires de bras opposé 32, 34, 33, 35, 36, 37 engrenant mutuellement par leurs extrémités adjacentes respectivement et solidarisés de façon articulée à leur autre extrémité à deux pièces (par exemple allongées en forme de barres) 38, 39 mutuellement déplaçables sous l'action du dispositif d'entraînement, ce grâce à quoi lesdits bras forment au moins un losange déformable conférant un déplacement mutuellement parallèle de deux pièces 38, 39. Il est alors souhaitable que les interrupteurs de fin de course 40, 41 se trouvent à l'intérieur du tube guide 15. On peut prévoir un interrupteur de fin de course 41 fonctionnel dans le cas de l'extension qui est agencé pour détecter la détente de l'élément souple 4 et donner à l'actionneur une course de sécurité variable et automatique.

Un tel agencement est notamment intéressant pour soulever une partie mobile de lit : la pièce inférieure 38 est alors une barre transversale ou traverse d'extrémité d'une armature fixe du lit tandis que la pièce 39 est une barre transversale ou traverse du cadre de la partie mobile du lit déplaçable verticalement par pivotement par rapport à l'armature fixe. Dans cette configuration le dispositif d'entraînement conforme à l'invention est monté de façon flottante en étant fixé aux pièces 38 et 39 par les susdits bras, et demeure à sensiblement égale distance des pièces 38 et 39 au cours du déplacement mutuel de celles-ci. Dans ce type précis d'application, on est assuré que la pièce 39 ne peut pas s'incliner par rapport à la pièce 38 même si la charge qu'elle supporte, en position relevée, n'est pas symétriquement répartie (par exemple personne allongée sur un côté du lit en partie relevé).

## Revendications

1. Dispositif d'entraînement destiné au déplacement dans l'espace d'une partie mobile par rapport à une partie fixe, comprenant un moteur entraînant autour de son arbre un élément enroulable tirant par une première extrémité sur un organe allongé raccordé à ladite partie mobile ou fixe et agencé pour coulisser télescopiquement à l'intérieur d'un guide tubulaire qui est raccordé à l'autre partie respectivement fixe ou mobile ;
caractérisé en ce que :
- le moteur est supporté par le guide tubulaire et son arbre s'étend transversalement dans ce dernier pour tirer l'organe allongé uniquement dans un premier sens de déplacement par rapport audit guide tubulaire ;
- à l'élément enroulable sont associés des moyens de démultiplication qui comprennent un mécanisme de mouflage étagé avec des galets disposés à l'intérieur d'au moins le guide tubulaire ou l'élément allongé, l'un de ces galets étant un galet menant monté sur l'arbre de sortie du moteur et sur lequel s'enroule la seconde extrémité de l'élément enroulable ; et
- un ressort de rappel est associé à l'élément allongé pour rappeler celui-ci en extension.

2. Dispositif d'entraînement selon la revendication 1, caractérisé en ce que l'élément enroulable est choisi parmi un feuillard (4) métallique, une chaîne, un filin souple, notamment une corde à piano.

3. Dispositif d'entraînement selon la revendication 1 ou 2, caractérisé en ce que les galets (5 à 8) sont de diamètres différents et sont étagés sur des axes séparés (11, 13) à l'intérieur de l'élément de levage mobile (9 ; 12, 14) à l'intérieur du guide (15).

4. Dispositif d'entraînement selon l'une quelconque des revendications 1 à 3, caractérisé en ce que le moteur (1) est choisi parmi un moteur électrique à aimant permanent extra-plat, un moteur pneumatique avec frein électrique piloté par des interrupteurs de fin de course (16, 17) électriques, ou un moteur hydraulique freiné qui est commandé par une électrovanne pilotée par des interrupteurs de fin de course (16, 17) électriques.

5. Dispositif d'entraînement selon l'une quelconque des revendications 1 à 4, caractérisé en ce que l'élément mobile (9) est pourvu, pour sa fixation sur un objet, d'un axe amovible (25) assujetti à un amortisseur intégré (28), notamment un ressort (28) lié à l'extrémité (29) dudit élément mobile (9), servant de sécurité en cas de surcharge.

6. Dispositif d'entraînement selon l'une quelconque des revendications 1 à 5, caractérisé en ce que l'élément mobile (9) est lié (en 40) à un tube extérieur coaxial (31) supportant des paires de bras opposés (32, 34, 33, 35, 36), 37) engrenant mutuellement par leurs extrémités adjacentes respectivement et solidarisés de façon articulée à leur autre extrémité à deux pièces (38, 39) mutuellement déplaçables sous l'action du dispositif d'entraînement, ce grâce à quoi lesdits bras forment au moins un losange déformable conférant un déplacement mutuellement parallèle des deux pièces (38, 39).

7. Dispositif d'entraînement selon la revendication 7, caractérisé en ce que des interrupteurs de fin de course (40, 41) se trouvent à l'intérieur du tube guide (15).

8. Dispositif d'entraînement selon la revendication 7, caractérisé en ce qu'un interrupteur de fin de course intérieur d'extension (41) est agencé pour détecter la dtente de l'élément souple (4) et donner à l'actionneur une course de sécurité variable et automatique.

## Claims

1. An actuating device intended for spacially moving a mobile part in relation to a fixed part, including a motor driving, around its shaft, a winding element pulling by a first end thereof on an elongated member connected to said mobile or fixed part and adapted for telescopically slide inside a tubular guide which is connected respectively to the other fixed or mobile part ;
characterized in that :
- the motor is supported by the tubular guide and its shaft extends transversally in said latter so as to pull the elongated member only in a first direction of displacement with respect to said tubular guide ;
- demultiplying means are associated with the winding element which include a multistage pulley block mechanism with pulleys disposed inside at least the tubular guide or the elongated member, one of said pulleys being a driving pulley mounted on the output shaft of the motor and on which the second end of the winding element winds ; and
- a return spring is associated with the elongated member so as to ensure the return of the latter in extension.

2. An actuating device according to claim 1, characterized in that the flexible winding element is selected from a metal strip (4), a chain, a flexible sling rope, in particular a steel string.

3. An actuating device according to claim 1 or 2, characterized in that the rollers (5 to 8) have various diameters and are stepped on separate axes (11, 13) inside the mobile lifting element (9 ; 12, 14) inside the guide (15).

4. A driving or actuating device according to anyone of claims 1 to 3, characterized in that the motor (1) is selected from an extremely flat permanent magnet electric motor, a pneumatic motor with electric brake controlled with electric stroke end switches (16, 17), or a braked hydraulic motor which is controlled by a solenoid valve controlled by electric stroke end switches (16, 17).

5. An actuating device according to anyone of claims 1 to 4, characterized in that the mobile element (9) is provided, for its fastening to an object, with a removable axis (25) attached to an integrated damper (28), in particular spring (28) connected to the end (29) of said mobile element (9), used as safety in case of overload.

6. An actuating device according to anyone of claims 1 to 5, characterized in that the mobile element (9) is connected (in 40) to a coaxial external tube (31) supporting pairs of opposite arms (32, 34, 33, 35, 36, 37) mutually engaged respectively by their adjacent ends integrally and connected with articulation at their other ends to two part (38, 39) mutually displaceable under the action of the actuating device, whereby said arms form at least a deformable rhombus ensuring a mutually parallel displacement of the two parts (38, 39).

7. An actuating device according to claim 6, characterized in that stroke end switches (40, 41) are located inside the guide tube (15).

8. A driving or actuating device according to claim 7, characterized in that an internal extension stroke end switch (41) is adapted to detect the tripping action of the flexible element (4) and to provide the actuator with a variable and automatic safety stroke.

## Patentansprüche

1. Antriebsvorrichtung zum räumlichen Verschieben eines beweglichen Teils gegenüber einen feststehenden Teil mit einem Motor, der um seine Welle ein aufwickelbares Element antreibt, das über ein erstes Ende zu einem langgestreckten Organ gezogen ist, das mit dem beweglichen oder dem feststehenden Teil verbunden ist und derart angeordnet ist, daß es teleskopartig in einem Inneren einer röhrenförmigen Führung verschiebbar ist, die mit dem anderen, entsprechend feststehenden oder beweglichen Teil verbunden ist, **dadurch gekennzeichnet, daß:**
der Motor von der röhrenförmigen Führung getragen wird und sich seine Welle quer durch sie erstreckt, um das langgestreckte Organ nur in einer ersten Verschiebungsrichtung in Bezug auf die röhrenförmige Führung zu ziehen;
dem aufwickelbaren Element eine Untersetzungseinrichtung zugeordnet ist, die einen Flaschenzug umfaßt, der stufenförmig mit Rollen aufgebaut ist, die im Inneren von wenigstens der röhrenförmigen Führung oder dem langgestreckten Element angeordnet sind, wobei eine der Rollen eine auf der Welle des Motorausgangs angeordnete Antriebsrolle ist, auf der sich das zweite Ende des aufwickelbaren Elements aufwickelt; und
eine Rückstellfeder mit dem verlängerten Element verbunden ist, um dieses in Ausfahrstellung zurückzustellen.

2. Antriebsvorrichtung nach Anspruch 1, **dadurch gekennzeichnet,** daß das aufwickelbare Element unter einem metallischen Bandmaterial (4), einer Kette, einem biegsamen Seil, insbesondere einer Klaviersaite, ausgewählt ist.

3. Antriebsvorrichtung nach Anspruch 1 oder 2, **dadurch gekennzeichnet,** daß die Rollen (5 bis 8) unterschiedliche Durchmesser aufweisen und stufenförmig auf getrennten Achsen (11, 13) im Inneren des beweglichen Hubelements (9; 12, 14) im Inneren der Führung (15) angeordnet sind.

4. Antriebsvorrichtung nach einem der Ansprüche 1 bis 3, **dadurch gekennzeichnet, daß** der Motor (1) unter einem Elektromotor mit extraflachem Magnet, einem Pneumatikmotor mit elektrischer Bremse, die durch elektrische Endschalter (16, 17) gesteuert wird, oder einem hydraulisch gebremsten Motor, der durch ein durch Endschalter (16, 17) gesteuertes Elektroventil betätigt wird, ausgewählt ist.

5. Antriebsvorrichtung nach einem der Ansprüche 1 bis 4, **dadurch gekennzeichnet, daß** das bewegliche Element (9) für seine Befestigung an einem Gegenstand mit einer lösbaren Achse (25) versehen ist, die an einem integrierten Dämpfer (28) befestigt ist, der im Fall einer Überlastung der Sicherheit dient, insbesondere mit einer Feder (28), die mit einem Ende (29) des beweglichen Elements (9) verbunden ist.

6. Antriebsvorrichtung nach einem der Ansprüche 1 bis 5, **dadurch gekennzeichnet,** daß das bewegliche Element (9) in (40) mit einem äußeren koaxialen Rohr (31) verbunden ist, das von Paaren gegenüberliegender Hebel (32, 34, 33, 35, 36, 37) getragen wird, die an ihren jeweils angrenzenden Enden gegenseitig ineinandergreifen und der beweglichen Ausführung zufolge an ihren anderen Enden an zwei Teilen (38, 39) unter Einsatz der Antriebsvorrichtung wechselseitig verschieblich sind und daß das Entgegenkommen, wozu die Hebel zumindest eine verformbare Raute bilden, den zwei parallelen Teilen (38, 39) eine wechselseitige Verschiebung verleiht.

7. Antriebsvorrichtung nach Anspruch 7, **dadurch gekennzeichnet, daß** sich die Endschalter (40, 41) im Inneren des Führungsrohres (15) befinden.

8. Antriebsvorrichtung nach Anspruch 7, **dadurch gekennzeichnet, daß** ein innerer Endschalter (41) der Extension angeordnet ist, um die Sperrung des biegsamen Elementes (4) zu ermitteln und um der Antriebseinrichtung einen variablen und automatischen Sicherheitshub zu verleihen.
